# FASCICULE DE BREVET EUROPEEN

(11) **EP 1 462 900 B1**
(45) Date de publication et mention de la délivrance du brevet: **12.10.2005**
(21) Numéro de dépôt: 04290636.2
(22) Date de dépôt: 09.03.2004
(51) Int. Cl.: G05D 1/08, G05D 19/02, B64C 13/16

(54) **Procédé et dispositif pour contrer les vibrations induites dans un aéronef par le fonctionnement en moulinet d'une soufflante d'un turboréacteur**
Verfahren und Vorrichtung zur Dämpfung der durch Autorotation eines Triebwerkes verursachten Vibrationen in einem Flugzeug
Method and device for damping vibrations in an aircraft caused by a windmilling fan of a turbojet

(30) Priorité: 26.03.2003 FR 0303697
(43) Date de publication de la demande: 29.09.2004
(73) Titulaire: AIRBUS France, 31060 Toulouse (FR)
(72) Inventeur: Kubica, François, 31100 Toulouse (FR); Briere, Dominique, 31520 Ramonville Saint Agne (FR)
(74) Mandataire: Bonnetat, Christian

(56) Documents cités:
- FR-A- 2 672 028
- US-A- 4 706 902
- US-B1- 6 416 017

## Description

La présente invention concerne un procédé permettant de contrer les vibrations induites, dans un aéronef équipé de turboréacteurs, par le fonctionnement en moulinet d'au moins l'une des soufflantes desdits turboréacteurs. Elle concerne également un système de commandes de vol électriques pour aéronef mettant en oeuvre ce procédé.

On sait que, lorsqu'un turboréacteur d'aéronef est arrêté en vol, par exemple à la suite de la rupture d'une ou de plusieurs pales de sa soufflante, cette dernière tourne en rotation libre ou autorotation sous l'effet du flux d'air pénétrant dans ledit turboréacteur. Ce phénomène est désigné en aéronautique, d'une façon générale, par le terme anglo-saxon de "windmilling" ou par l'expression française de "fonctionnement en moulinet".

Un tel fonctionnement en moulinet d'une soufflante induit et propagé dans l'aéronef des vibrations dont là fréquence dépend de la phase de vol, mais est comprise entre 5 et 15 Hz. De telles vibrations induites, part, soumettent la structure de l'aéronef, et donc l'équipage et les passagers, à des efforts vibratoires importants et, d'autre part, peuvent rendre difficiles, sinon impossibles, les tâches de pilotage pour le pilote qui y est soumis.

Pour pouvoir résister à ces efforts vibratoires, la structure de l'aéronef, les meubles, les supports, les calculateurs, les sièges, etc ... doivent être renforcés en conséquence, ce qui accroît la masse totale de l'aéronef. Lorsque l'aéronef est de grandes dimensions et est équipé de moteurs puissants, les renforcements exigés pour résister aux vibrations induites entraînent une augmentation de masse considérable de l'aéronef, ce qui nuit aux performances de ce dernier. De plus, de tels renforcements importants ne concernent que la résistance mécanique de la structure de l'aéronef et n'améliorent en rien les difficultés de pilotage et l'inconfort des passagers et de l'équipage.

L'objet de la présente invention est de remédier à ces inconvénients en évitant une augmentation exagérée de la masse de l'aéronef, tout en permettant au pilote de l'aéronef de toujours pouvoir effectuer aisément les tâches de pilotage.

A cette fin, l'invention concerne un procédé permettant de contrer les vibrations induites, dans un aéronef équipé de moteurs du type turboréacteur, par le fonctionnement en moulinet d'au moins l'une des soufflantes desdits moteurs, ledit aéronef comportant un système de commandes de vol électriques qui :
- engendre des ordres électriques de commandes de vol destinés à des servocommandes aptes à actionner les gouvernes dudit aéronef ; et
- asservit lesdites servocommandes auxdits ordres électriques de commande de vol, en limitant le fonctionnement desdites servocommandes à une bande de fréquences réduite, usuellement de l'ordre de 0 à 4 Hz,
procédé selon lequel :
- on surveille l'apparition desdites vibrations induites ; et
- en cas de détection de telles vibrations induites :
   . on calcule un ordre électrique de commande additionnel qui, appliqué à la servocommande d'au moins une gouverne, permet à celle-ci de s'opposer auxdites vibrations induites ;
   . on somme l'ordre électrique de commande de vol concernant ladite gouverne et ledit ordre électrique de commande additionnel pour obtenir un ordre de commande global pour ladite gouverne ; et
   . on asservit temporairement ladite servocommande audit ordre de commande global, en permettant le fonctionnement de ladite servocommande dans une bande de fréquences élargie, de l'ordre de 0 à 15 Hz.

Ainsi, selon l'invention, on intervient de façon active contre les vibrations induites par le fonctionnement en moulinet d'une soufflante, et non plus seulement de façon passive, comme on le faisait jusqu'à présent en renforçant la structure de l'aéronef. Il en résulte que les renforcements de structure peuvent être moins importants (ce qui permet des gains de masse appréciables) et que les conditions de pilotage et de confort sont améliorées.

On remarquera que le document US-B1-6 416 017 décrit déjà un procédé et un système permettant de contrer des vibrations induites dans un aéronef équipé de moteurs du type turboréacteur et comportant un système de commandes de vol électriques qui :
- engendre des ordres électriques de commandes de vol destinés à des servocommandes aptes à actionner les gouvernes dudit aéronef ; et
- asservit lesdites servocommandes auxdits ordres électriques de commande de vol, en limitant le fonctionnement desdites servocommandes dans une bande de fréquences réduite,
procédé et système dans lesquels :
- on surveille l'apparition desdites vibrations induites ; et
- en cas de détection de telles vibrations induites :
   - on calcule un ordre électrique de commande additionnel qui, appliqué à la servocommande d'au moins une gouverne, permet à celle-ci de s'opposer auxdites vibrations induites, et
   - on somme l'ordre électrique de commande de vol concernant ladite gouverne et ledit ordre électrique de commande additionnel pour obtenir un ordre de commande global pour ladite gouverne.

Toutefois, dans ce document antérieur, les vibrations induites sont engendrées par des phénomènes extérieurs, tels que rafales de vent et turbulences, et non pas par un fonctionnement d'une soufflante en moulinet.

Par ailleurs, on sait que l'état de l'art, en ce qui concerne les servocommandes utilisées à bord des aéronefs, consiste à faire fonctionner ces dernières dans une bande passante de fréquences limitée supérieurement à 3 ou 4 Hz, notamment pour des considérations de fatigue et de durée de vie, cette bande passante étant compatible avec les fréquences contrôlées par les pilotes ou par le pilote automatique.

Par exemple, le document FR 2 672 028 décrit un système permettant d'améliorer le comportement en flottement d'un aéronef. Ce système comporte un filtre passe-bande qui permet de limiter le champ des fréquences surveillées à une bande comprise entre 1 Hz - 4 Hz.

Or, comme déjà mentionné ci-dessus, les vibrations induites par le fonctionnement en moulinet d'au moins une soufflante sont plus élevées et comprises entre 5 et 15 Hz.

Il est donc impossible de contrôler par les gouvernes de l'aéronef les mouvements vibratoires engendrés par un fonctionnement en moulinet.

Cependant, si l'on examine les servocommandes usuelles, on constate que leur vérin peut fonctionner à des fréquences d'au moins 15 Hz et que le bridage desdites servocommandes à une bande de fréquences réduite est réalisé dans les boucles d'asservissement, qui les contrôlent et qui sont implantées dans un calculateur de commande de vol, par filtrage des ordres de commande et par fixation à de faibles valeurs de leur gain d'asservissement.

Aussi, conformément à la présente invention, lorsque l'on détecte le phénomène de fonctionnement en moulinet, on calcule l'ordre (l'ordre électrique de commande additionnel) qu'il faut adresser à la servocommande d'une gouverne pour que celle-ci contre les effets vibratoires de ce phénomène et on débride temporairement ladite servocommande pour qu'elle puisse fonctionner exceptionnellement et temporairement à des fréquences supérieures à ces fréquences de fonctionnement usuelles et ainsi obéir audit ordre additionnel.

On remarquera que, lorsqu'un fonctionnement en moulinet d'une soufflante se produit à bord d'un aéronef, l'objectif du pilote est d'atterrir le plus rapidement possible, de façon à pouvoir réparer ou changer le moteur à l'arrêt, avant toute reprise de vol. Ainsi, l'aéronef, dans lequel le fonctionnement en moulinet aura été contré conformément à la présente invention, ne volera que quelque temps en asservissement débridé élargi, de sorte que l'impact sur la fatigue des servocommandes sera négligeable.

On remarquera de plus que l'ordre électrique additionnel chargé de contrer lesdites vibrations induites ne se substitue pas à l'ordre de commande de vol, mais est additionné à ce dernier en s'y juxtaposant, puisque leurs domaines de fréquences (5-15 Hz pour l'un et 0-3 Hz pour l'autre) sont différents. Ainsi, le pilotage de l'aéronef n'est pas modifié par la mise en oeuvre du procédé conforme à la présente invention.

Avantageusement, la détection desdites vibrations induites est obtenue par des mesures accélérométriques en au moins un point de l'aéronef. De préférence, chacun de ces points est voisin d'un moteur, puisque c'est la soufflante d'un de ceux-ci qui risque d'être la source desdites vibrations. Dans ces mesures accélérométriques, on examine celles dont la fréquence est comprise entre 5 Hz et 15 Hz (plage de fréquences caractéristique d'un fonctionnement en moulinet) et on compare l'amplitude de ces dernières à un seuil prédéterminé, représentatif desdites vibrations induites. Un tel seuil est de préférence déterminé à partir du modèle aéroélastique modifié spécifique audit aéronef et auxdits moteurs, comme cela est expliqué ci-après.

Par ailleurs, pour calculer ledit ordre électrique de commande additisonnel, on effectue également des mesures accélérométriques, représentatives desdites vibrations induites, en au moins un emplacement dudit aéronef et on détermine ledit ordre électrique de commande additionnel à partir de relations préétablies qui, pour chaque accélération audit emplacement, sont aptes à délivrer un tel ordre électrique de commande additionnel.

Avantageusement, ces relations préétablies sont issues également dudit modèle aéroélastique modifé.

On sait que le modèle aéroélastique spécifique à un aéronef indique, entre autres informations, d'une part, l'amplitude, la fréquence et la phase des vibrations engendrées dans le fuselage de l'aéronef en fonction des accélérations subies par ce dernier au niveau de chaque moteur et, d'autre part, l'amplitude, la fréquence et les phases des vibrations engendrées dans le fuselage de l'aéronef par les battements alternatifs de chaque gouverne. Un tel modèle aéroélastique est usuellement calculé de façon théorique par le constructeur de l'aéronef.

Par ailleurs, le constructeur d'un turboréacteur d'aéronef détermine, de façon usuelle, par calcul, le modèle de fonctionnement en moulinet de la soufflante dudit turboréacteur, indiquant l'amplitude, la fréquences et la phase des vibrations engendrées dans l'aéronef, à l'emplacement dudit turboréacteur, par un tel fonctionnement en moulinet.

Aussi, en combinant ces deux modèles, on obtient un modèle aéroélastique modifié permettant d'établir lesdites relations déterminant la commande qu'il faut adresser à une gouverne pour contrer les vibrations engendrées en un emplacement de l'aéronef par le fonctionnement en moulinet d'une soufflante de moteur.

Bien entendu, ce modèle aéroélastique modifié est purement théorique et, éventuellement, il est avantageux de le compléter et/ou de l'améliorer de façon expérimentale, par exemple par des essais en vol.

De ce qui précède, on comprendra aisément que ledit modèle aéroélastique modifié permet également de déterminer ledit seuil d'amplitude, servant à détecter l'apparition desdites vibrations induites.

Dans une forme de mise en oeuvre pratique du procédé selon l'invention, concernant un aéronef comportant au moins deux paires de gouvernes symétriques (ailerons, volets, gouvernes de profondeur, ...), pilotées par un ordre de commande de vol vertical et par un ordre de commande de vol latéral (c'est-à-dire horizontal et orthogonal à l'axe longitudinal dudit aéronef) :
- on calcule un premier ordre électrique de commande additionnel apte à contrer la composante verticale desdites vibrations induites audit emplacement ;
- on calcule un second ordre électrique de commande additionnel apte à contrer la composante latérale desdites vibrations induites audit emplacement ;
- on somme ledit ordre électrique de commande de vol vertical et ledit premier ordre électrique de commande additionnel pour obtenir un premier ordre de commande global ;
- on somme ledit ordre de commande de vol latéral et ledit second ordre électrique de commande additionnel pour obtenir un second ordre de commande global ;
- on asservit audit premier ordre de commande global, en commun, les servocommandes des deux gouvernes symétriques de l'une desdites paires, de façon que ces gouvernes se braquent de façon symétrique dans le même sens ; et
- on asservit audit second ordre de commande global, en commun, les servocommandes des deux gouvernes symétriques de l'autre desdites paires, de façon que ces dernières gouvernes se braquent de façon antisymétrique en sens opposés.

La présente invention concerne de plus un système de commandes de vol électriques mettant en oeuvre le procédé décrit ci-dessus.

Selon l'invention, le système de commandes de vol électriques pour un aéronef, qui est équipé de moteurs, du type turboréacteur, comportant chacun une soufflante apte à fonctionner en moulinet en cas d'arrêt dudit moteur en vol, ledit système engendrant, pour les gouvernes dudit aéronef, des ordres électriques de commande qui sont adressés à des servocommandes respectives aptes à actionner lesdites gouvernes par l'intermédiaire de moyens d'asservissement limitant le fonctionnement desdites servocommandes à une bande de fréquences réduite, usuellement de l'ordre de 0 à 4 Hz, comporte :
- des moyens de détection de l'apparition des vibrations induites dans l'aéronef par le fonctionnement en moulinet d'au moins l'une desdites soufflantes ;
- des moyens de mesure desdites vibrations induites à au moins un emplacement dudit aéronef ;
- au moins une table dans laquelle sont enregistrées des relations préétablies entre les vibrations induites audit emplacement et la commande qu'il faut adresser à au moins une gouverne pour contrer lesdites vibrations induites ;
- des moyens de calcul, reliés auxdits moyens de mesure et à ladite table, pour engendrer un ordre électrique additionnel de commande qui, appliqué à au moins ladite gouverne, est apte à contrer lesdites vibrations induites au moins audit emplacement dudit aéronef ;
- des moyens de sommation permettant de combiner, en un ordre de commande global pour ladite gouverne, ledit ordre électrique de commande qui la concerne et ledit ordre électrique additionnel de commande ; et
- des moyens pour asservir temporairement ladite servocommande audit ordre global, en permettant le fonctionnement de ladite servocommande dans une bande de fréquences élargie, de l'ordre de 0 à 15 Hz.

Lesdits moyens de détection et lesdits moyens de mesure comportent des accéléromètres. Eventuellement, ces accéléromètres pourraient être communs à ces deux moyens. Cependant, de préférence, pour des raisons d'efficacité, chacun desdits moyens comportent ses propres accéléromètres, ceux des moyens de détection étant disposés au voisinage desdits moteurs qui sont la source desdites vibrations induites et ceux des moyens de mesure (qui déterminent les paramètres de l'action à mener contre lesdites vibrations induites) étant disposés plutôt dans le fuselage et dans la cabine de pilotage, là où l'effet desdites vibrations induites doit être le plus combattu pour le confort des passagers et la pilotabilité de l'aéronef.

Les moyens d'asservissement à bande de fréquences réduite et les moyens d'asservissement temporaire à bande de fréquences élargie peuvent être constitués par des dispositifs d'asservissement distincts. Dans ce cas, ledit système de commandes de vol électriques comporte des moyens dé commutation permettant, lorsque lesdits moyens de détection détectent de telles vibrations induites, de :
- mettre hors circuit le dispositif d'asservissement à bande de fréquences réduite ; et
- mettre en circuit ledit dispositif d'asservissement temporaire à bande de fréquences élargie, de façon que la servocommande associée à ladite gouverne puisse être contrôlée par ledit ordre de commande global.

En variante, lesdits moyens d'asservissement à bande de fréquences réduite et lesdits moyens d'asservissement temporaire à bande de fréquences élargie peuvent être constitués, au moins en partie, par les mêmes composants, dont au moins certains d'entre eux (notamment les amplificateurs de gains) sont réglables pour permettre de faire passer la limite de fonctionnement en fréquence d'au plus 4 Hz à au moins 15 Hz.

De préférence, lesdits moyens de calcul sont hors circuit tant qu'aucun fonctionnement en moulinet d'une soufflante n'est détecté et ils sont mis en circuit par lesdits moyens de détection, dès l'apparition desdites vibrations induites.

Dans le cas général où l'aéronef comporte au moins deux paires de gouvernes symétriques et où ledit système de commandes de vol électriques engendre pour lesdites gouvernes un ordre électrique de commande de vol vertical et un ordre électrique de commande de vol latéral :
- lesdits moyens de mesure délivrent la composante verticale et la composante latérale desdites vibrations induites ;
- lesdits moyens de calcul calculent un premier et un second ordres électriques de commande additionnels aptes respectivement à contrer lesdites composantes verticale et latérale desdites vibrations induites ;
- lesdits moyens de sommation additionnent :
   . ledit ordre électrique de commande de vol vertical et ledit premier ordre électrique de commande additionnel pour former un premier ordre de commande global ;
   . ledit ordre électrique de commande de vol latéral et ledit second ordre électrique de commande additionnel pour former un second ordre de commande global ; et
- lesdits moyens d'asservissement temporaire à bande de fréquences élargie asservissent, audit premier ordre de commande global, les servocommandes des deux gouvernes symétriques de l'une desdites paires, de façon que ces dernières gouvernes se braquent de façon symétrique dans le même sens ; et
- lesdits moyens d'asservissement temporaire à bande de fréquences élargie asservissent, audit second ordre de commande global, les servocommandes des deux gouvernes symétriques de l'autre desdites paires, de façon que ces dernières gouvernes se braquent de façon antisymétrique en sens opposés.

De préférence, lesdits moyens de calcul et ladite table font partie intégrante dudit système de commandes de vol électriques.

Les figures du dessin annexé feront bien comprendre comment l'invention peut être réalisée. Sur ces figures, des références identiques désignent des éléments semblables.
La figure 1 montre, en perspective du dessus, un avion gros porteur.
La figure 2 montre le schéma synoptique d'un système de commandes de vol électriques pour l'avion de la figure 1, ledit système étant perfectionné selon la présente invention pour éviter les effets vibratoires du fonctionnement en moulinet de la soufflante d'au moins un moteur dudit avion.
La figure 3 illustre une variante de réalisation du système de la figure 2.

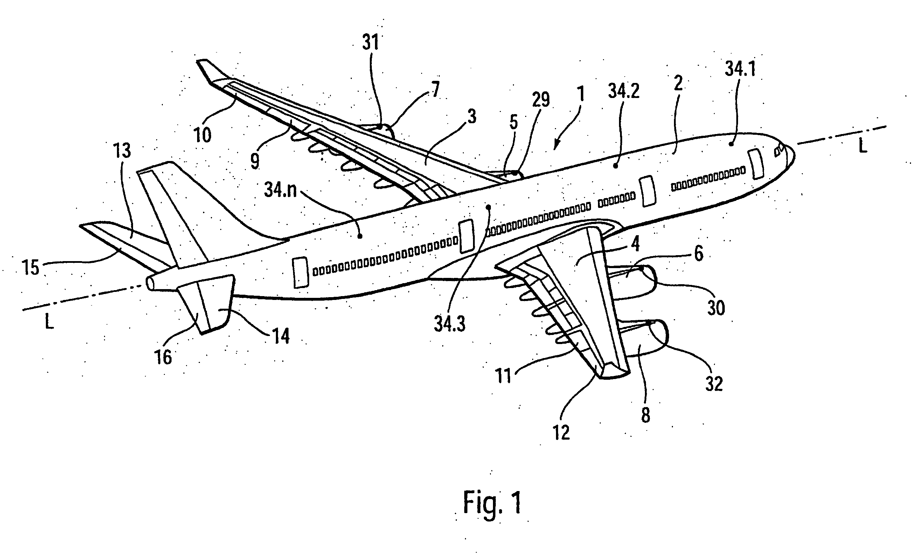

L'avion gros porteur quadriréacteur 1, représenté schématiquement en perspective sur la figure 1, comporte un fuselage 2 d'axe longitudinal L-L et deux ailes 3 et 4 disposées de part et d'autre dudit fuselage 2. Chaque aile porte un moteur interne 5 ou 6 et un moteur externe 7 ou 8, lesdits moteurs 5 à 8 étant du type turboréacteur. Par ailleurs, entre autres gouvernes, l'aile 3 porte un aileron interne 9 et un aileron externe 10. De même, l'aile 4 porte, entre autres gouvernes, un aileron interne 11 et un aileron externe 12. Les deux ailes 3 et 4 sont symétriques l'une de l'autre par rapport au fuselage 2 et il en est de même de leurs moteurs et de leurs ailerons, pris deux à deux.

A l'arrière, l'avion 1 comporte de plus des empennages horizontaux symétriques 13 et 14, respectivement pourvus de gouvernes de profondeur symétriques l'une de l'autre, portant respectivement les références 15 et 16.

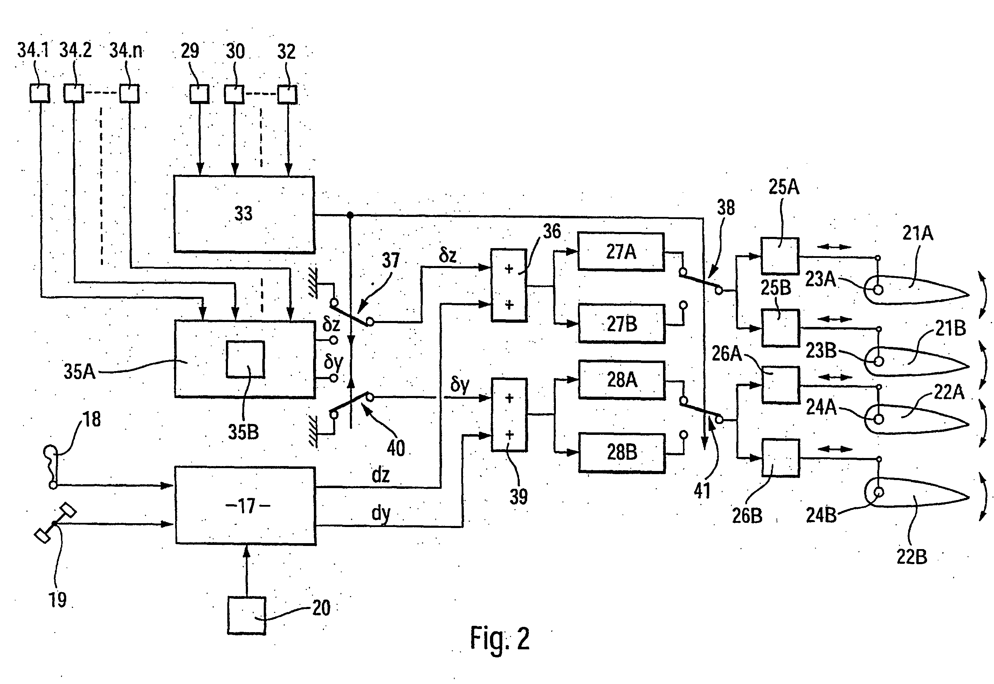

Pour commander l'une ou l'autre des gouvernes 9 à 12, 15 et 16, l'avion 1 comporte un système de commandes de vol électriques 17, recevant des ordres de pilotage d'organes de pilotage 18 et 19 (manche, palonnier, ...) actionnés par un pilote ou d'un pilote automatique 20, comme cela est représenté sur la figure 2. En réponse auxdits ordres de pilotage, ledit système de commandes de vol électriques 17 calcule un ordre électrique de commande de vol vertical dZ et un ordre électrique de commande de vol latéral (c'est-à-dire horizontal et orthogonal à l'axe L-L) dY.

Sur la figure 2, on a représenté deux paires de gouvernes symétriques 21A, 21B, d'une part, et 22A, 228, d'autre part.

La paire de gouvernes 21A, 21B est représentative de l'une ou l'autre des paires de gouvernes symétriques 9-11, 10-12 et 15-16 décrites ci-dessus. De préférence, la paire de gouvernes 22A-22B est représentative de l'une ou l'autre des paires de gouvernes symétriques 9-11 et 10-12.

Chaque gouverne 21A, 21B, 22A, 22B est pourvue d'un arbre de rotation respectif 23A, 23B, 24A, 24B, autour duquel elle peut tourner sous l'action d'une servocommande respective 25A, 25B, 26A, 26B.

Les servocommandes 25A et 258 sont commandées en commun par un dispositif d'asservissement 27A recevant du système 17 ledit ordre vertical dZ et elles braquent les deux gouvernes 21A et 21B de façon symétrique, dans le même sens.

Les servocommandes 26A et 26B sont commandées en commun par un dispositif d'asservissement 28A recevant du système 17 ledit ordre latéral dY et elles braquent les deux gouvernes 22A et 22B de façon antisymétrique, en sens opposés.

De façon usuelle, afin de limiter la fatigue des servocommandes 25A, 25B, 26A, 26B et de réduire leur sensibilité au bruit, les dispositifs d'asservissement 27A et 28A --qui peuvent être du type en boucle ouverte ou au contraire du type en boucle fermée avec retour de la position des gouvernes correspondantes-- limitent volontairement, grâce à des filtres et à des gains d'asservissement réduits, le fonctionnement desdites servocommandes à des fréquences au plus égales à 4 Hz. La bande de fréquences de 0 à 4 Hz dans laquelle sont autorisées à fonctionner lesdites servocommandes est définie par le filtrage fréquentiel des ordres dZ et dY dans lesdits dispositifs d'asservissement 27A et 28A, ainsi que par le choix d'un faible gain d'asservissement pour ces derniers.

Par ailleurs, sur les nacelles des moteurs 5 à 8 ou en d'autres endroits voisins de ces derniers, sont montés des accéléromètres 29 à 32 mesurant les composantes verticale et latérale des accélérations oscillatoires auxquelles ils sont soumis. Les accéléromètres 29 à 32 transmettent leurs mesures accélérométriques à un détecteur 33, apte à détecter un fonctionnement en moulinet de la soufflante d'au moins l'un des moteurs 5 à 8. Pour ce faire, le détecteur 33 recherche, dans les mesures accélérométriques qui lui sont adressées, les accélérations dont la fréquence est comprise entre 5 Hz et 15 Hz (fréquences caractéristiques du fonctionnement en moulinet) et dont l'amplitude est supérieure à un seuil, qui est déterminé par calcul (comme indiqué ci-dessus à propos du modèle aéroélastique modifié) et/ou par essais et qui est représentatif de l'apparition du fonctionnement en moulinet d'au moins une des soufflantes.

De même, en divers emplacements de l'avion gros porteur 1, notamment dans la cabine des passagers et dans la cabine de pilotage, sont montés des accéléromètres 34.1 à 34.n, ... mesurant, en ces emplacements, les composantes verticale et latérale des accélérations oscillatoires. Ces dernières mesures sont adressées à un calculateur 35A, apte à calculer des ordres électriques de commande additionnels δZ et δY qui, appliqués respectivement aux servocommandes 25A, 25B des gouvernes 21 A, 21B et aux servocommandes 26A, 26B des gouvernes 22A, 22B, permettent à ces gouvernes de contrecarrer les vibrations aux emplacements des accéléromètres 34.1 à 34.n.

Une table 35B est incorporée au calculateur 35A et elle contient des relations qui sont préétablies à partir dudit modèle aéroélastique modifié, tel que défini ci-dessus, et qui, pour chaque composante verticale et latérale des mesures accélérométriques aux emplacements des accéléromètres 34.1 à 34.n, délivrent des ordres électriques de commande additionnels δZ et δY aptes à contrer respectivement lesdites composantes en ces emplacements et apparaissant aux deux sorties du calculateur 35A.

En parallèle sur les dispositifs d'asservissement 27A et 28A sont, par ailleurs, respectivement montés des dispositifs d'asservissement additionnels 27B et 28B --du type en boucle ouverte ou du type en boucle fermée-- permettant aux servocommandes 25A, 25B, 26A et 26B de fonctionner à des fréquences au moins égales à 15 Hz.

De façon semblable à ce qui a été mentionné pour les dispositifs d'asservissement 27A et 28A, la bande de fréquence élargie de 0 à 15 Hz dans laquelle les dispositifs d'asservissement 27B et 28B autorisent le fonctionnement des servocommandes 25A, 25B, 26A, 26B est définie par des filtres de fréquence incorporés dans lesdits dispositifs 27B et 28B, ainsi que par le choix d'un gain d'asservissement plus élevé pour ces dernières.

Les entrées des dispositifs d'asservissement 27A et 27B sont reliées à la sortie d'un sommateur 36, dont une entrée est reliée à la sortie dZ du système de commandes de vol électriques 17 et dont l'autre entrée peut être reliée à la sortie δZ du calculateur 35A, par l'intermédiaire d'un commutateur 37, commandé par le détecteur 33. De plus, l'une ou l'autre des sorties des dispositifs d'asservissement 27A et 27B est reliée aux servocommandes 25A et 25B par un commutateur 38, également commandé par le détecteur 33.

De façon similaire, les entrées des dispositifs d'asservissement 28A et 28B sont reliées à la sortie d'un sommateur 39, dont une entrée est reliée à la sortie dY du système de commandes de vol électriques 17 et dont l'autre entrée peut être reliée à la sortie δY du calculateur 35A, par l'intermédiaire d'un commutateur 40, commandé par le détecteur 33. De plus, l'une ou l'autre des sorties des dispositifs d'asservissement 28A et 28B est relié aux servocommandes 26A et 26B par un commutateur 41, également commandé par le détecteur 33.

Lorsque le détecteur 33 ne détecte aucune accélération dont la fréquence est comprise entre 5 Hz et 15 Hz et dont l'amplitude est supérieure audit seuil prédéterminé, les commutateurs 37 et 40 mettent le calculateur 35A hors circuit et les commutateurs 38 et 41 relient la sortie du dispositif d'asservissement 27A aux servocommandes 25A et 25B et la sortie du dispositif d'asservissement 28A aux servocommandes 26A et 26B.

Ainsi, lorsque, en vol, aucun des moteurs 5 à 8 n'est à l'arrêt, les servocommandes 25A, 25B, 26A et 26B (et donc les gouvernes 21A, 21B, 22A, 22B) sont respectivement commandées par le seul système de commandes de vol électriques 17, par l'intermédiaire des sommateurs 36 et 39 et des dispositifs d'asservissement 27A et 28A à bande de fréquences de fonctionnement limitée supérieurement à 4 Hz.

En revanche, dès que le détecteur 33 détecte des vibrations induites, dues au fonctionnement en moulinet de la soufflante d'au moins un moteur 5 à 8 à l'arrêt, il fait basculer les commutateurs 37, 38, 40 et 41. De ce fait, le calculateur 35A et les dispositifs d'asservissement 27B et 28B à bande en fréquences élargie sont mis en circuit, alors que les dispositifs d'asservissement 27A et 28A sont mis hors circuit. Dans ce cas, les servocommandes 25A, 25B et 26A, 26B sont respectivement commandées par des ordres globaux représentés par les sommes dZ+δZ et dY+δY des ordres de commande dZ, dY engendrés par le système 17 et des ordres de commande additionnels δZ et δY calculés par le calculateur 35A, lesdites sommes étant effectuées respectivement par les sommateurs 36 et 39 et étant appliquées par l'intermédiaire des dispositifs d'asservissement 27B et 28B à bande de fréquences élargie.

Les gouvernes 21A et 21B peuvent donc osciller de façon symétrique, sous la dépendance de l'ordre de commande additionnel δZ, pour contrer les composantes verticales dés vibrations induites par le fonctionnement en moulinet de la soufflante d'au moins l'un des moteurs 5 à 8, tout en répondant à l'ordre de commande dZ engendré par le système de commandes de vol 17.

De même, les gouvernes 22A et 22B peuvent osciller de façon antisymétrique, sous la dépendance de l'ordre de commande additionnel δY, pour contrer les composantes latérales des vibrations induites par un tel fonctionnement en moulinet, tout en répondant à l'ordre de commande dY issu du système 17.

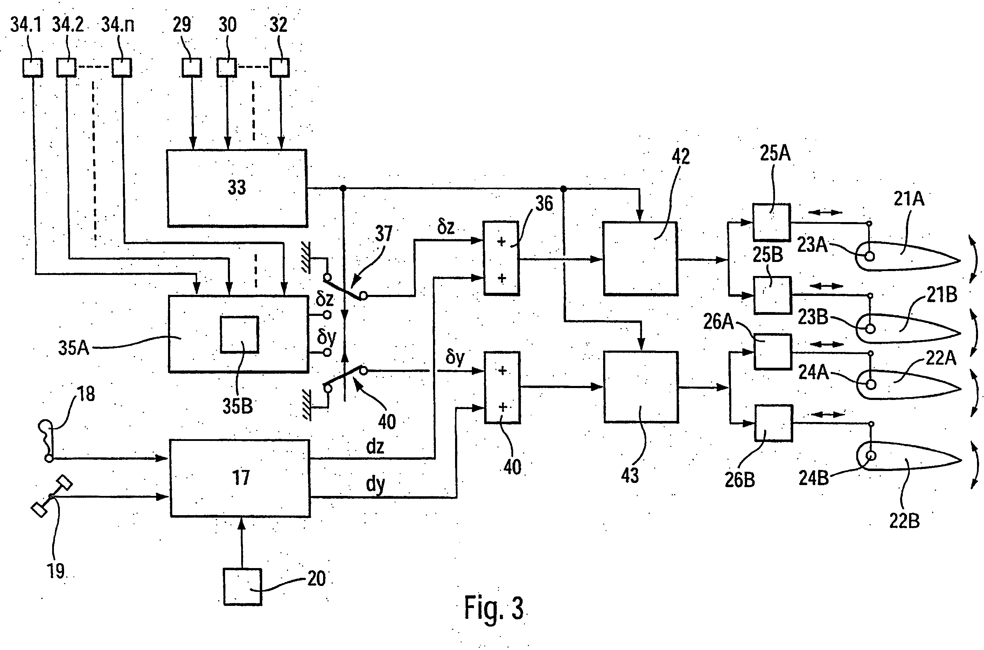

Dans la variante de réalisation de la figure 3, on retrouve tous les éléments montrés par la figure 2, à l'exception des commutateurs 38 et 41, qui ont été supprimés. De plus, les dispositifs d'asservissement 27A et 27B ont été supprimés et remplacés par un unique dispositif d'asservissement 42. De même, les dispositifs d'asservissement 28A et 28B ont été supprimés et remplacés par un unique dispositif d'asservissement 43.

Ces dispositifs d'asservissement 42 et 43, qui peuvent être du type en boucle ouverte ou du type en boucle fermée, comportent des éléments réglables, par exemple des amplificateurs de gains d'asservissement, commandés par le détecteur 33. Ainsi, en absence de fonctionnement en moulinet d'au moins une des soufflantes, les dispositifs d'asservissement 42 et 43 limitent le fonctionnement des servocommandes 25A, 25B, 26A, 26B à la bande de fréquences réduite de 0 à 4 Hz. En revanche, en cas d'apparition d'un fonctionnement en moulinet, les éléments réglables des dispositifs d'asservissement 42 et 43 sont commandés par le détecteur 33 pour permettre le fonctionnement desdites servocommandes 25A, 25B, 26A, 26B à la bande de fréquences élargie de 0 à 15 Hz.

## Revendications

1. Procédé permettant de contrer les vibrations induites, dans un aéronef (1) équipé de moteurs (5 à 8) du type turboréacteur, par le fonctionnement en moulinet d'au moins l'une des soufflantes desdits moteurs, ledit aéronef comportant un système de commandes de vol électriques (17) qui :
- engendre des ordres électriques de commandes de vol (dZ, dY) destinés à des servocommandes (25A, 25B, 26A, 26B) aptes à actionner les gouvernes dudit aéronef ; et
- asservit lesdites servocommandes auxdits ordres électriques de commande de vol, en limitant le fonctionnement desdites servocommandes dans une bande de fréquences réduite,
procédé selon lequel :
- on surveille l'apparition desdites vibrations induites ; et
- en cas de détection de telles vibrations induites :
. on calcule un ordre électrique de commande additionnel (δZ, δY) qui, appliqué à la servocommande d'au moins une gouverne, permet à celle-ci de s'opposer auxdites vibrations induites ;
. on somme l'ordre électrique de commande de vol (dZ, dY) concernant ladite gouverne et ledit ordre électrique de commande additionnel (δZ, δY) pour obtenir un ordre de commande global pour ladite gouverne ; et
. on asservit temporairement ladite servocommande audit ordre de commande global, en permettant le fonctionnement de ladite servocommande dans une bande de fréquences élargie.

2. Procédé selon la revendication 1,
**caractérisé en ce que**, pour détecter lesdites vibrations induites, on effectue des mesures accélérométriques en au moins un point (29 à 32) dudit aéronef et on compare l'amplitude des mesures accélérométriques, dont la fréquence est comprise entre 5 Hz et 15 Hz, à un seuil prédéterminé, représentatif desdites vibrations induites.

3. Procédé selon la revendication 2,
**caractérisé en ce que** lesdites mesures accélérométriques destinées à la détection desdites vibrations induites sont effectuées au voisinage desdits moteurs.

4. Procédé selon l'une des revendications 1 à 3,
**caractérisé en ce que**, pour calculer ledit ordre électrique de commande additionnel, on effectue des mesures accélérométriques, représentatives desdites vibrations induites, en au moins un emplacement (34.1 à 34.n) dudit aéronef, et on détermine ledit ordre électrique de commande additionnel à partir de relations préétablies qui, pour chaque accélération audit emplacement, sont aptes à délivrer un tel ordre électrique de commande additionnel.

5. Procédé selon la revendication 4,
**caractérisé en ce que** lesdites mesures accélérométriques destinées au calcul dudit ordre électrique de commande additionnel sont effectuées dans le fuselage et, plus particulièrement, dans la cabine de pilotage dudit aéronef.

6. Procédé selon l'une des revendications 4 ou 5, pour un aéronef comportant au moins deux paires de gouvernes symétriques (21A, 21B - 22A, 22B), pilotées par un ordre électrique de commande de vol vertical et par un ordre électrique de commande de vol latéral,
**caractérisé en ce que** :
- on calcule un premier ordre électrique de commande additionnel (δZ) apte à contrer la composante verticale desdites vibrations induites audit emplacement ;
- on calcule un second ordre électrique de commande additionnel (δY) apte à contrer la composante latérale desdites vibrations induites audit emplacement ;
- on somme ledit ordre électrique de commande de vol vertical (dZ) et ledit premier ordre électrique de commande additionnel (δZ) pour obtenir un premier ordre de commande global ;
- on somme ledit ordre de commande de vol latéral (dY) et ledit second ordre électrique de commande additionnel (δY) pour obtenir un second ordre de commande global ;
- on asservit audit premier ordre de commande global, en commun, les servocommandes des deux gouvernes symétriques (21 A, 21 B) de l'une desdites paires, de façon que ces gouvernes se braquent de façon symétrique dans le même sens ; et
- on asservit audit second ordre de commande global, en commun, les servocommandes des deux gouvernes symétriques (22A, 22B) de l'autre desdites paires, de façon que ces dernières gouvernes se braquent de façon antisymétrique en sens opposés.

7. Système de commandes de vol électriques pour un aéronef, qui est équipé de moteurs, du type turboréacteur, comportant chacun une soufflante apte à fonctionner en moulinet en cas d'arrêt dudit moteur en vol, ledit système engendrant, pour les gouvernes dudit aéronef, des ordres électriques de commande (dZ, dY) qui sont adressés à des servocommandes respectives (25A, 25B, 26A, 26B) aptes à actionner lesdites gouvernes par l'intermédiaire de moyens d'asservissement (27A, 28A) limitant le fonctionnement desdites servocommandes dans une bande de fréquences réduite, ledit système comportant :
- des moyens (29 à 33) de détection de l'apparition des vibrations induites dans l'aéronef par le fonctionnement en moulinet d'au moins l'une desdites soufflantes ;
- des moyens (34.1 à 34.n) de mesure desdites vibrations induites à au moins un emplacement dudit aéronef ;
- au moins une table (35B) dans laquelle sont enregistrées des relations préétablies entre les vibrations induites audit emplacement et la commande qu'il faut adresser à au moins une gouverne pour contrer lesdites vibrations induites ;
- des moyens de calcul (35A), reliés auxdits moyens de mesure et à ladite table, pour engendrer un ordre électrique additionnel de commande qui, appliqué à au moins ladite gouverne, est apte à contrer lesdites vibrations induites au moins audit emplacement dudit aéronef ;
- des moyens de sommation (36, 39) permettant de combiner, en un ordre de commande global pour ladite gouverne, ledit ordre électrique de commande qui la concerne et ledit ordre électrique additionnel de commande ; et
- des moyens (27B, 28B) pour asservir temporairement ladite servocommande audit ordre global, en permettant le fonctionnement de ladite servocommande dans une bande de fréquences élargie.

8. Système selon la revendication 7,
**caractérisé en ce que** lesdits moyens de détection comportent des accéléromètres (29 à 32) disposés au voisinage d'au moins certains desdits moteurs.

9. Système selon l'une des revendications 7 ou 8,
**caractérisé en ce que** lesdits moyens de mesure comportent des accéléromètres (34.1 à 34.n) disposés dans le fuselage et, plus particulièrement, la cabine de pilotage dudit aéronef.

10. Système selon l'une des revendications 7 à 9,
**caractérisé en ce que** :
- les moyens d'asservissement à bande de fréquences réduite et les moyens d'asservissement temporaire à bande de fréquences élargie sont constitués par deux dispositifs d'asservissement distincts ; et
- des moyens de commutation (38, 41) sont prévus pour, lorsque lesdits moyens de détection détectent l'apparition desdites vibrations induites :
■ mettre hors circuit le dispositif d'asservissement (27A, 28A) à bande de fréquences réduite ; et
■ mettre en circuit ledit dispositif d'asservissement temporaire (27B, 28B) à bande de fréquences élargie, de façon que la servocommande associée à ladite gouverne puisse être contrôlée par ledit ordre de commande global.

11. Système selon l'une des revendications 7 à 9,
**caractérisé en ce que** lesdits moyens d'asservissement à bande de fréquences réduite et lesdits moyens d'asservissement temporaire à bande de fréquences élargie sont constitués, au moins en partie, par les mêmes composants, dont au moins certains d'entre eux sont réglables pour permettre de faire varier ladite bande de fréquences.

12. Système selon l'une des revendications 7 à 11,
**caractérisé en ce que** lesdits moyens de calcul (35A) sont mis en circuit par lesdits moyens de détection (33), à l'apparition desdites vibrations induites.

13. Système selon l'une des revendications 7 à 12, pour un aéronef (1) qui comporte au moins deux paires de gouvernes symétriques (21A, 21B - 22A, 22B), ledit système de commandes (17) engendrant pour lesdites gouvernes un ordre électrique de commande de vol vertical (dZ) et un ordre électrique de commande de vol latéral (dY) : **caractérisé en ce que** :
- lesdits moyens de mesure (34.1 à 34.n) délivrent la composante verticale et la composante latérale desdites vibrations induites ;
- lesdits moyens de calcul (35A) calculent un premier et un second ordres électriques de commande additionnels (δZ, δY) aptes respectivement à contrer lesdites composantes verticale et latérale desdites vibrations induites ;
- lesdits moyens de sommation additionnent :
. ledit ordre électrique de commande de vol vertical et ledit premier ordre électrique de commande additionnel pour former un premier ordre de commande global ;
. ledit ordre électrique de commande de vol latéral et ledit second ordre électrique de commande additionnel pour former un second ordre de commande global ; et
- lesdits moyens d'asservissement temporaire (27B) asservissent, audit premier ordre de commande global, les servocommandes (25A, 25B) des deux gouvernes symétriques (21A, 21B) de l'une desdites paires, de façon que ces dernières gouvernes se braquent de façon symétrique dans le même sens ; et
- lesdits moyens d'asservissement temporaire (28B) asservissent, audit second ordre de commande global, les servocommandes (26A, 26B) des deux gouvernes symétriques (22A, 22B) de l'autre desdites paires, de façon que ces dernières gouvernes se braquent de façon antisymétrique en sens opposés.

14. Système selon l'une des revendications 7 à 13,
**caractérisé en ce que** lesdits moyens de calcul (35A) font partie intégrante dudit système de commandes de vol électriques (17).

## Patentansprüche

1. Verfahren zum Dämpfen von Vibrationen, die in einem mit Triebwerksmotoren (5 bis 8) ausgestatteten Flugzeug (1) durch den Windmühlenbetrieb wenigstens eines Gebläses der Motoren verursacht werden, wobei das Flugzeug ein elektrisches Flugsteuersystem (17) umfasst, das:
- elektrische Flugsteuerbefehle (dZ, dY) erzeugt, die für Servoantriebe (25A, 258, 26A, 26B) bestimmt sind, die dazu ausgebildet sind, die Steuerruder des Flugzeugs zu betätigen; und
- die Servoantriebe mit den elektrischen Flugsteuerbefehlen so steuert, dass der Betrieb der Servoantriebe auf einen reduzierten Frequenzbereich beschränkt ist,
wobei nach diesem Verfahren:
- das Auftreten der verursachten Vibrationen überwacht wird; und
- im Falle der Erfassung solcher verursachten Vibrationen:
• ein elektrischer Zusatzsteuerbefehl (δZ, δY) berechnet wird, der, wenn dieser für den Servoantrieb wenigstens eines Steuerruders verwendet wird, diesem erlaubt, den verursachten Vibrationen entgegen zu wirken;
• der das Steuerruder betreffende elektrische Flugsteuerbefehl (dZ, dY) und der elektrische Zusatzsteuerbefehl (δZ, δY) addiert werden, um einen Gesamtsteuerbefehl für das Steuerruder zu erhalten; und
• der Servoantrieb zeitweise mit dem Gesamtsteuerbefehl so geregelt wird, dass der Betrieb des Servoantriebs in einem erweiterten Frequenzbereicht möglich wird.

2. Verfahren nach Anspruch 1,
**dadurch gekennzeichnet, dass** zur Erfassung der verursachten Vibrationen Beschleunigungsmessungen an wenigstens einem Punkt (29 bis 32) des Flugzeugs durchgeführt werden und die Amplitude der Beschleunigungsmessungen, deren Frequenz zwischen 5 Hz und 15 Hz liegt, mit einem für die verursachten Vibrationen repräsentativen, vorbestimmten Schwellenwert verglichen wird.

3. Verfahren nach Anspruch 2,
**dadurch gekennzeichnet, dass** die Beschleunigungsmessungen zur Erfassung der verursachten Vibrationen in der Nähe der Motoren durchgeführt werden.

4. Verfahren nach einem der Ansprüche 1 bis 3,
**dadurch gekennzeichnet, dass** zum Berechnen des elektrischen Zusatzsteuerbefehls die für die verursachten Vibrationen repräsentativen Beschleunigungsmessungen an wenigstens einer Stelle (34.1 bis 34.n) des Flugzeugs durchgeführt werden und der elektrische Zusatzsteuerbefehl aus vorher bestimmten Verhältnissen bestimmt wird, die so ausgelegt sind, dass sie für jede Beschleunigung an dieser Stelle einen solchen elektrischen Zusatzsteuerbefehl liefern.

5. Verfahren nach Anspruch 4,
**dadurch gekennzeichnet, dass** die zur Berechnung des elektrischen Zusatzsteuerbefehls bestimmten Beschleunigungsmessungen im Flugzeugrumpf und insbesondere im Cockpit des Flugzeugs durchgeführt werden.

6. Verfahren nach einem der Ansprüche 4 oder 5, für ein Flugzeug mit wenigstens zwei Paaren symmetrischer Steuerruder (21A, 21 B - 22A, 22B), die durch einen elektrischen Vertikal-Flugsteuerbefehl und durch einen elektrischen Lateral-Flugsteuerbefehl gesteuert werden,
**dadurch gekennzeichnet, dass**:
- ein erster elektrischer Zusatzsteuerbefehl (δZ) berechnet wird, der so ausgelegt ist, dass dieser dem vertikalen Bestandteil der an der Stelle verursachten Vibrationen entgegen wirkt;
- ein zweiter elektrischer Zusatzsteuerbefehl (δY) berechnet wird, der so ausgelegt ist, dass dieser dem lateralen Bestandteil der an der Stelle verursachten Vibrationen entgegen wirkt;
- der elektrische Vertikal-Flugsteuerbefehl (dZ) und der erste elektrische Zusatzsteuerbefehl (δZ) addiert werden, um einen ersten Gesamtsteuerbefehl zu erhalten;
- der Lateral-Flugsteuerbefehl (dY) und der zweite elektrische Zusatzsteuerbefehl (δY) addiert werden, um einen zweiten Gesamtsteuerbefehl zu erhalten;
- mit dem ersten Gesamtsteuerbefehl gemeinsam die Servoantriebe der symmetrischen Steuerruder (21A, 21B) eines der Paare in der Weise geregelt wird, dass sich diese Steuerruder in symmetrischer Weise in der gleichen Richtung verstellen; und
- mit dem zweiten Gesamtsteuerbefehl gemeinsam die Servoantriebe der zwei symmetrischen Steuerruder (22A, 22B) des anderen der Paare in der Weise geregelt wird, dass sich diese in asymmetrischer Weise in entgegen gesetzten Richtungen verstellen.

7. Elektrisches Flugsteuersystem für ein Flugzeug, das mit Triebwerksmotoren ausgestattet ist, die jeweils ein Gebläse aufweisen, das so ausgebildet ist, dass dieses im Falle eines Motorstillstandes während des Fluges wie eine Windmühle funktioniert, wobei das System für die Steuerruder des Flugzeugs elektrische Steuerbefehle (dZ, dY) aufweist, die an jeweilige Servoantriebe (25A, 25B, 26A, 26B) adressiert sind, welche so ausgebildet sind, dass sie die Steuerruder mit Hilfe von Regelungseinrichtungen (27A, 28A) steuern, die den Betrieb der Servoantriebe auf einen reduzierten Frequenzbereich begrenzen, wobei das System umfasst:
- Mittel (29 bis 33) zur Erfassung des Auftretens von in dem Flugzeug durch den Windmühlenbetrieb wenigstens eines der Gebläse verursachten Vibrationen;
- Mittel (34.1 bis 34.n) zum Messen der verursachten Vibrationen an wenigstens einer Stelle des Flugzeugs;
- wenigstens eine Tabelle (35B), in welcher die vorher bestimmten Verhältnisse zwischen den an der Stelle verursachten Vibrationen und dem Befehl, der an wenigstens ein Steuerruder adressiert werden muss, um den verursachten Vibrationen entgegen zu wirken;
- Berechnungsmittel (35A), die mit den Mitteln zur Messung und mit der Tabelle verbunden sind, um einen elektrischen Zusatzsteuerbefehl zu erzeugen, der, wenn er wenigstens an dem Steuerruder angewendet wird, so ausgelegt ist, dass den wenigstens an dieser Stelle des Flugzeugs verursachten Vibrationen entgegen gewirkt wird;
- Additionsmittel (36, 39), die bei einem Gesamtsteuerbefehl für das Steuerruder den diesen betreffenden Steuerbefehl und den elektrischen Zusatzsteuerbefehl zu kombinieren ermöglichen; und
- Mittel (27B, 28B) zum zeitweisen Regeln des Servoantriebs mit dem Gesamtbefehl, derart, dass der Betrieb des Servoantriebs in einem erweiterten Frequenzbereich möglich ist.

8. System nach Anspruch 7,
**dadurch gekennzeichnet, dass** die Erfassungsmittel Beschleunigungsmesser (29 bis 32) aufweisen, die in der Nähe wenigstens einiger der Motoren angeordnet sind.

9. System nach einem der Ansprüche 7 oder 8,
**dadurch gekennzeichnet, dass** die Messeinrichtungen Beschleunigungsmesser (34.1 bis 34.n) aufweisen, die in dem Flugzeugrumpf und insbesondere in dem Cockpit des Flugzeugs angeordnet sind.

10. System nach einem der Ansprüche 7 bis 9,
**dadurch gekennzeichnet, dass**:
- die Mittel zur Regelung mit reduziertem Frequenzbereich und die Mittel zur zeitweisen Regelung mit erweiterten Frequenzbereich durch zwei getrennte Regelungseinrichtungen gebildet sind; und
- Schalteinrichtungen (38, 41) vorgesehen sind, um, während die Erfassungsmittel das Auftreten der verursachten Vibrationen erfassen:
• die Regelungseinrichtung (27A, 28A) mit reduziertem Frequenzbereich auszuschalten; und
• die zeitweise Regelungseinrichtung (27B, 28B) mit erweitertem Frequenzbereich einzuschalten, derart, dass der dem Steuerruder zugeordnete Servoantrieb durch den Gesamtsteuerbefehl gesteuert werden kann.

11. System nach einem der Ansprüche 7 bis 9,
**dadurch gekennzeichnet, dass** die Regelungsmittel mit reduziertem Frequenzbereich und die temporären Regelungsmittel mit erweitertem Frequenzbereich teilweise durch dieselben Bauteile gebildet werden, von denen wenigstens einige so eingestellt werden können, dass der Frequenzbereich variiert werden kann.

12. System nach einem Ansprüche 7 bis 11,
**dadurch gekennzeichnet, dass** die Berechnungsmittel (35A) beim Auftritt der verursachten Vibrationen durch die Erfassungsmittel (33) eingeschaltet werden.

13. System nach einem der Ansprüche 7 bis 12, für ein Flugzeug (1), das wenigstens zwei symmetrische Steuerruderpaare aufweist (21A, 21B - 22A, 22B), wobei das Steuersystem (17) für die Steuerruder einen elektrischen Vertikal-Flugsteuerbefehl (dZ) und einen elektrischen Lateral-Flugsteuerbefehl (dY) erzeugt:
**dadurch gekennzeichnet, dass**:
- die Messungsmittel (34.1 bis 34.n) den vertikalen Bestandteil und den lateralen Bestandteil der verursachten Vibrationen liefern;
- die Berechnungsmittel (34A) einen ersten und einen zweiten elektrischen Zusatzsteuerbefehl (δZ, δY) berechnen, der jeweils so ausgelegt ist, dass dieser den vertikalen und lateralen Bestandteilen der verursachten Vibrationen entgegen wirkt;
- wobei die Addierungsmittel addieren:
• den elektrischen Vertikal-Flugsteuerbefehl und den ersten elektrischen Zusatzsteuerbefehl, um einen ersten Gesamtsteuerbefehl zu bilden;
• den elektrischen Lateral-Flugsteuerbefehl und den zweiten elektrischen Zusatzsteuerbefehl, um einen zweiten Gesamtsteuerbefehl zu bilden; und
- wobei die temporären Regelungsmittel (27B) mit dem ersten Gesamtsteuerbefehl die Servoantriebe (25A, 25B) der zwei symmetrischen Steuerruder (21A, 21B) eines der Paare in der Weise regeln, dass sich diese Steuerruder in symmetrischer Weise in der gleichen Richtung verstellen; und
- die temporären Regelungsmittel (28B) mit dem zweiten Gesamtsteuerbefehl die Servoantriebe (26A, 26B) der zwei symmetrischen Steuerruder (22A, 22B) des anderen der Paare in der Weise regeln, dass sich diese Steuerruder in asymmetrischer Weise in entgegen gesetzten Richtungen verstellen.

14. System nach einem der Ansprüche 7 bis 13,
**dadurch gekennzeichnet, dass** die Berechnungsmittel (35A) ein integrierter Teil des elektrischen Flugsteuersystems (17) sind.

## Claims

1. Process making it possible to counter the vibrations induced, in an aircraft (1) equipped with engines (5 to 8) of the turbofan type, by the windmilling of at least one of the fans of said engines, said aircraft comprising a system of electric flight controls (17) which:
- produces electric flight control commands (dZ, dY) intended for servocontrols (25A, 25B, 26A, 26B) able to actuate the control surfaces of said aircraft; and
- slaves said servocontrols to said electric flight control commands, limiting the operation of said servocontrols in a reduced frequency band,
process according to which:
- the appearance of said induced vibrations is monitored; and
- in case of detection of such induced vibrations:
• an additional electric control command (δZ, δY) is computed, which, applied to the servocontrol of at least one control surface, allows the latter to oppose said induced vibrations;
• the electric flight control command (dZ, dY) relating to said control surface and said additional electric control command (δZ, δY) are summed to obtain an overall control command for said control surface; and
• said servocontrol is temporarily slaved to said overall control command, allowing the operation of said servocontrol in a widened frequency band.

2. Process according to Claim 1,
**characterized in that**, to detect said induced vibrations, accelerometric measurements are performed at at least one point (29 to 32) of said aircraft and the amplitude of the accelerometric measurements, whose frequency lies between 5 Hz and 15 Hz, is compared to a predetermined threshold representative of said induced vibrations.

3. Process according to Claim 2, **characterized in that** said accelerometric measurements intended for the detection of said induced vibrations are performed in the neighbourhood of said engines.

4. Process according to one of Claims 1 to 3,
**characterized in that**, to compute said additional electric control command, accelerometric measurements representative of said induced vibrations are performed at at least one location (34.1 to 34.n) of said aircraft, and said additional electric control command is determined on the basis of preestablished relations which, for each acceleration at said location, are able to deliver one such additional electric control command.

5. Process according to Claim 4,
**characterized in that** said accelerometric measurements intended for the computation of said additional electric control command are performed in the fuselage and, more particularly, on the flight deck of said aircraft.

6. Process according to either of Claims 4 and 5, for an aircraft comprising at least two pairs of symmetric control surfaces (21A, 21B - 22A, 22B), steered by a vertical electric flight control command and by a lateral electric flight control command,
**characterized in that**:
- a first additional electric control command (δZ) able to counter the vertical component of said induced vibrations at said location is computed;
- a second additional electric control command (δY) able to counter the lateral component of said induced vibrations at said location is computed;
- said vertical electric flight control command (dZ) and said first additional electric control command (δZ) are summed to obtain a first overall control command;
- said lateral flight control command (dY) and said second additional electric control command (δY) are summed to obtain a second overall control command;
- the servocontrols of the two symmetric control surfaces (21A, 21B) of one of said pairs are slaved to said first overall control command, in common, in such a way that these control surfaces deflect symmetrically in the same direction; and
- the servocontrols of the two symmetric control surfaces (22A, 22B) of the other of said pairs are slaved to said second overall control command, in common, in such a way that these latter control surfaces deflect antisymmetrically in opposite directions.

7. System of electric flight controls for an aircraft, which is equipped with engines of the turbofan type, each comprising a fan able to windmill in case of shutdown of said engine in flight, said system producing, for the control surfaces of said aircraft, electric control commands (dZ, dY) which are addressed to respective servocontrols (25A, 25B, 26A, 26B) able to actuate said control surfaces by way of slaving means (27A, 28A) limiting the operation of said servocontrols in a reduced frequency band, said system comprising:
- means (29 to 33) of detection of the appearance of the vibrations induced in the aircraft by the windmilling of at least one of said fans;
- means (34.1 to 34.n) of measurement of said induced vibrations at at least one location of said aircraft;
- at least one table (35B) in which are recorded preestablished relations between the vibrations induced at said location and the order that must be addressed to at least one control surface to counter said induced vibrations;
- means of computation (35A), connected to said means of measurement and to said table, to produce an additional electric control command which, applied to at least said control surface, is able to counter said vibrations induced at least at said location of said aircraft;
- means of summation (36, 39) making it possible to combine, into an overall control command for said control surface, said electric control command which relates thereto and said additional electric control command; and
- means (27B, 28B) for temporarily slaving said servocontrol to said overall command, allowing the operation of said servocontrol in a widened frequency band.

8. System according to Claim 7,
**characterized in that** said means of detection comprise accelerometers (29 to 32) disposed in the neighbourhood of at least some of said engines.

9. System according to either of Claims 7 and 8,
**characterized in that** said means of measurement comprise accelerometers (34.1 to 34.n) disposed in the fuselage and, more particularly, on the flight deck of said aircraft.

10. System according to one of Claims 7 to 9,
**characterized in that**:
- the means of slaving to a reduced frequency band and the means of temporary slaving to a widened frequency band consist of two distinct slaving devices; and
- means of switching (38, 41) are provided for, when said means of detection detect the appearance of said induced vibrations:
• disabling the device of slaving (27A, 28A) to a reduced frequency band; and
• enabling said device for temporary slaving (27B, 28B) to a widened frequency band in such a way that the servocontrol associated with said control surface can be governed by said overall control command.

11. System according to one of Claims 7 to 9,
**characterized in that** said means of slaving to a reduced frequency band and said means of temporary slaving to a widened frequency band consist, at least in part, of the same hardware items, at least some of which are adjustable so as to allow said frequency band to be varied.

12. System according to one of Claims 7 to 11,
**characterized in that** said means of computation (35A) are enabled by said means of detection (33) upon the appearance of said induced vibrations.

13. System according to one of Claims 7 to 12, for an aircraft (1) which comprises at least two pairs of symmetric control surfaces (21A, 21B - 22A, 22B), said system of controls (17) producing for said control surfaces a vertical electric flight control command (dZ) and a lateral electric flight control command (dY) :
**characterized in that**:
- said means of measurement (34.1 to 34.n) deliver the vertical component and the lateral component of said induced vibrations;
- said means of computation (35A) compute a first and a second additional electric control command (δZ, δY) able respectively to counter said vertical and lateral components of said induced vibrations;
- said means of summation add together:
• said vertical electric flight control command and said first additional electric control command to form a first overall control command;
• said lateral electric flight control command and said second additional control command to form a second overall control command; and
- said means of temporary slaving (27B) slave, to said first overall control command, the servocontrols (25A, 25B) of the two symmetric control surfaces (21A, 21B) of one of said pairs in such a way that these latter control surfaces deflect symmetrically in the same direction; and
- said means of temporary slaving (28B) slave, to said second overall control command, the servocontrols (26A, 26B) of the two symmetric control surfaces (22A, 22B) of the other of said pairs in such a way that these latter control surfaces deflect antisymmetrically in opposite directions.

14. System according to one of Claims 7 to 13,
**characterized in that** said means of computation (35A) form an integral part of said system of electric flight controls (17).
